# EUROPEAN PATENT APPLICATION

(11) **EP 0 629 086 A2**
(43) Date of publication of application: **14.12.1994**
(21) Application number: 94108651.4
(22) Date of filing: 06.06.1994
(51) Int. Cl.: H04N 5/92

(54) **Method and apparatus for recording compressed motion video**

(30) Priority: 08.06.1993 JP 137604/93
(71) Applicant: HITACHI, LTD., Chiyoda-ku Tokyo, 101-10 (JP)
(72) Inventor: Takahashi, Masaru, Nr. 203 Hitachi Fujimi-ryo 1545, Yokohama-shi, Kanagawa-ken 244 (JP); Oku, Masuo, Kamakura-shi, Kanagawa-ken 247 (JP); Tsuboi, Yukitoshi, Nr. 302, Higashitotsuka-haitsu, Yokohama-shi, Kanagawa-ken 245 (JP); Fujii, Yukio, Nr. 102, Hitachi Fujimi-ryo, 1545, Yokohama-shi, Kanagawa-ken 244 (JP); Ichige, Kenji, Chigasaki-shi, Kanagawa-ken 253 (JP); Tsukiji, Nobuyoshi, Nr. 122, Hitachi Keimei-ryo, Yokohama-shi, Kanagawa-ken 244 (JP)
(74) Representative: Altenburg, Udo, Dipl.-Phys.

(57) **Abstract**

The present invention decides whether frames into which compressed moving picture signals are sequentially inputted are intra-frame-coded (intra-frames) or coded by the relation with a reference frame (prediction frames) by the intra-picture data detector, and when a recording start command is issued, starts to write the compressed moving picture signals into the buffer memory at the timing that the first intra-frame thereafter is detected, runs a magnetic tape so that the record starting point detector detects the record starting point on the magnetic tape, and when the record starting point is detected, reads the compressed moving picture signals from the buffer memory, supplies them to the head, and records them on the magnetic tape.

## Description

### BACKGROUND OF THE INVENTION

### FIELD OF THE INVENTION

The present invention relates to a compressed moving picture recording method and apparatus therefor for recording moving picture signals which are inter-frame-coded with prediction on a recording medium and particularly to assembling of sequences thereof.

### DESCRIPTION OF THE PRIOR ART

The picture coding art for compressing moving pictures is explained, for example, in the journal of the institute of television engineers of Japan; Vol. 45, No. 7 (1991), pp 800 to 819. Particularly a high compression ratio is obtained for inter-frame-coding with prediction, so that the art is applied to digital television (TV) broadcasting on a priority basis.

By using the mutual relation between frames, the prior art obtains a moving vector against a reference frame, takes the pixel value at the position which is offset in correspondence with the movement between the frames as a prediction value, and codes the difference from this prediction value and the moving vector. As a reference frame, the preceding or subsequent frame or both of them may be used. A frame which is coded like this will be called a prediction frame hereinafter. A frame (hereinafter called an intra-frame) which is intra-frame-coded at a certain interval of frames is inserted. For decoding, the prediction value of each frame is obtained using the difference of prediction value whenever an intra-frame starts and each frame is regenerated by using it.

When a digital TV signal (compressed moving picture signal) which is inter-frame-coded with prediction and data-compressed as mentioned above is applied to a magnetic recording/regenerating apparatus using a magnetic tape as a recording medium, it is predicted that the signal will be recorded or regenerated efficiently because the data compression ratio is high. However, this inter-frame-coding with prediction does not take recording and regenerating of data into full consideration. Therefore, when it is applied to a magnetic recording/regenerating apparatus, the following problems will be caused.

Namely, a conventional magnetic recording/regenerating apparatus is designed so as to record a new TV signal on a recording medium where TV signals are partially recorded already, that is, to perform so-called assembling of sequences. In the case of this assembling of sequences, the end edge of the recording region of TV signals (recorded TV signals) which are recorded already on the recording medium is used as a start position of the recording region of a TV signal (new TV signal) which is newly recorded so as to eliminate a gap (unrecorded region) on the boundary between the recording regions. By doing this, when such a recording medium is regenerated, the TV signals which are sequence-assembled are regenerated continuously so that images are not disordered on the boundaries of recording regions.

When the aforementioned assembling of sequences is performed on the aforementioned magnetic recording/regenerating apparatus for recording and regenerating compressed moving picture signals, the compressed moving picture signals become discontinuous on the boundaries.

Namely, intra-frames are inserted in a compressed moving picture signal at a predetermined interval of frames, accordingly the compressed moving picture signal can be decoded correctly. However, when an attempt is made to perform simple assembling of sequences from the recording region of a compressed moving picture signal (hereinafter called recorded compressed moving picture signal) which is recorded already, the prediction frame of a compressed moving picture signal (hereinafter called a new compressed moving picture signal) which is newly recorded follows the prediction frame of the recorded compressed moving picture signal on the boundary, and the signal cannot be decoded correctly from the boundary of assembling of sequences, and an abnormal reconstructed picture is obtained. When a compressed moving picture signal is decoded, whether the corresponding frame is an intra-frame or prediction frame is always decided and the signal is decoded according to the coding mode of the corresponding frame. Therefore, to prevent the aforementioned fault, it may be considered to stop the picture reconstructing until an intra-frame is reconstructed from the boundary of assembling of sequences, to start the decoding processing after the frame is reconstructed, and then to start picture reconstructing. However, it is very difficult to detect the boundary and the picture reconstructing is stopped until an intra-frame behind the boundary is reconstructed. This is not desirable for a user.

The same may be said with overwriting when a new compressed moving picture signal is recorded in the recording region of unnecessary recorded compressed moving picture signals on a recording medium or when a signal is recorded first on an unused tape.

### SUMMARY OF THE INVENTION

An object of the present invention is to eliminate the difficulties of the prior art mentioned above and to provide a compressed moving picture recording method and apparatus therefor for recording a compressed moving picture signal newly on a recording medium where compressed moving picture signals are already recorded so as to prevent the reconstructed picture from disordering by picture reconstructing from the recording medium.

To accomplish the above object, when the compressed moving picture recording method and apparatus therefor of the present invention records the sequence of each compressed moving picture signal on a recording medium, it starts to record from the intra-frame.

The compressed moving picture recording method and apparatus therefor of the present invention detects (first) an intra-frame of a compressed moving picture signal to be inputted, detects (second) the record starting point on a recording medium, writes the compressed moving picture signal when an intra-frame of the compressed moving picture signal is detected after a recording start command is issued, and reads the compressed moving picture signal to a recording signal when the record starting point on the recording medium is detected.

Furthermore, the present invention has a coding means for coding an input moving picture signal to a compressed moving picture signal so as to set the first frame after the recording start command is issued to an intra-frame, a detection means for detecting the record starting point on the recording medium when the recording start command is issued, and a memory means for writing from the first intra-frame of the compressed moving picture signal and reading the compressed moving picture signal after the record starting point is detected to a record signal.

The present invention has the function and operation indicated below.

According to the compressed moving picture recording method of the present invention, a compressed moving picture signal is recorded starting with an intra-frame on a recording medium, so that the compressed moving picture signal is reconstructed also starting with the intra-frame. Therefore, even if data is sequence-assembled or overwritten on the recording medium, the compressed moving picture signal is reconstructed starting with the intra-frame from the record starting point of the compressed moving picture signal and the picture reconstructing is performed satisfactorily from the beginning of the compressed moving picture signal.

In the compressed moving picture recording apparatus of the present invention, the compressed moving picture signal is written into the memory means starting with the intra-frame and read when the record starting point on the recording medium is detected. Therefore, the compressed moving picture signal starting with the intra-frame is delayed until the record starting point is detected and the compressed moving picture signal starting with the intraframe is recorded starting with the record starting point. Therefore, even if data is sequence-assembled or overwritten on the recording medium, the compressed moving picture signal is reconstructed starting with the intra-frame from the record starting point of the compressed moving picture signal and the picture reconstructing is performed satisfactorily from the beginning of the compressed moving picture signal.

The foregoing and other objects, advantages, manner of operation and novel features of the present invention will be understood from the following detailed description when read in connection with the accompanying drawings.

### BRIEF DESCRIPTION OF THE DRAWINGS

Fig. 1 is a block diagram showing an embodiment of the compressed moving picture recording method and apparatus therefor of the present invention.

Fig. 2 is a drawing showing an actual example of the record pattern on the magnetic tape recorded in the embodiment shown in Fig. 1.

Fig. 3 is a block diagram showing an actual example of a regenerating apparatus for regenerating the magnetic tape recorded in the embodiment shown in Fig. 1.

Fig. 4 is a block diagram showing another embodiment of the compressed moving picture recording method and apparatus therefor of the present invention.

### DETAILED DESCRIPTION OF THE PREFERRED EMBODIMENTS

The embodiments of the present invention will be explained hereunder with reference to the accompanying drawings.

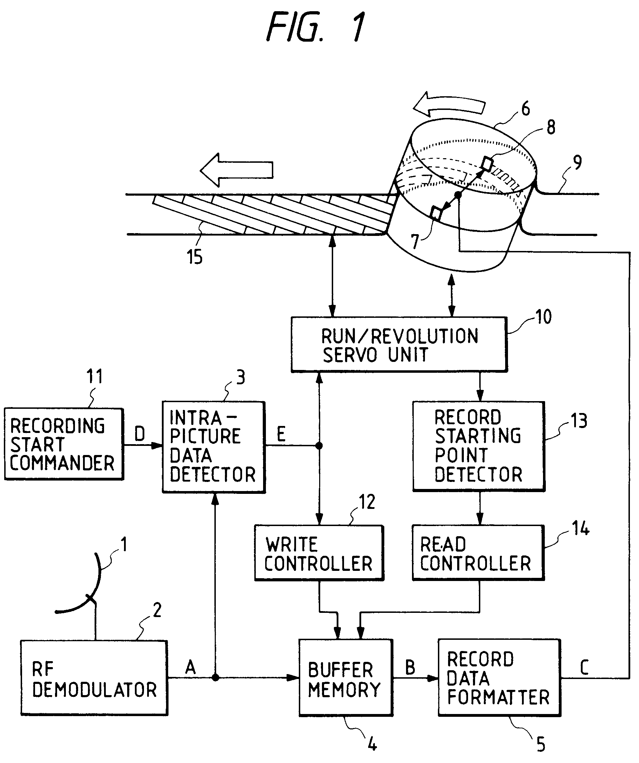

Fig. 1 is a block diagram showing an embodiment of the compressed moving picture recording method and apparatus therefor of the present invention. Numeral 1 indicates an antenna, 2 an RF (radio frequency) demodulator, 3 an intrapicture data detector, 4 a buffer memory, 5 a record data formatter, 6 a rotary cylinder, 7 and 8 heads, 9 a magnetic tape, 10 a run/revolution servo unit, 11 a recording start commander, 12 a write controller, 13 a record starting point detector, 14 a read controller, and 15 a track.

In the drawing, the antenna 1 receives, for example, a TV broadcasting signal (compressed moving picture signal) which is inter-frame-coded with prediction and data-compressed and outputs an RF signal thereof. The RF signal is supplied to the RF demodulator 2 and a demodulated compressed moving picture signal A is outputted. The compressed moving picture signal A is supplied to the intra-picture data detector 3 and the buffer memory 4.

When a recording start command D is supplied to the intra-picture data detector 3 from the recording start commander 11 by an instruction of a user, the detector starts operation, detects start of the data of the first intra-frame of the compressed moving picture signal A, and generates a start timing signal E. The write controller 12 starts operation in correspondence with the start timing signal E and writes the compressed moving picture signal A into the buffer memory 4 starting with the beginning of the intra-frame detected by the intra-picture data detector 3. The compressed moving picture signal A is read from the buffer memory 4 by the read controller 14, converted to packet data for recording to which a synchronous code, ID code, and error correcting parity code are added by the record data formatter 5, and supplied to the heads 7 and 8.

The heads 7 and 8 are mounted to the rotary cylinder 6 whose revolution is controlled by the run/revolution servo unit 10 at an angle of 180° and the magnetic tape 9 is wound spirally on the peripheral surface of the rotary cylinder 6 at about 180°. In this state, the magnetic tape 9 is controlled in running by the run/revolution servo unit 10. Therefore, the heads 7 and 8 scan the magnetic tape 9 alternately and obliquely and a compressed moving picture signal C supplied to the heads 7 and 8 from the record data formatter 5 is recorded on the magnetic tape 9 as an oblique track 15.

Next, the sequence assembling operation of this embodiment will be explained.

In this case, when the start timing signal E is outputted from the intra-picture data detector 3 as mentioned above and the buffer memory 4 starts to write the compressed moving picture signal A by the write controller 12, the run/revolution servo unit 10 operates by the start timing signal E simultaneously, and the rotary cylinder 6 rotates, and the magnetic tape 9 runs so as to retrieve the record starting point which is the end edge of the recording region of recorded compressed moving picture signals. The record starting point is detected by the record starting point detector 13 using an output signal from the run/revolution servo unit 10. As a detection method therefor, the sequence assembling detection method which is conventionally known may be used.

When the record starting point detector 13 detects the record starting point, the read controller 14 starts operation and reads the compressed moving picture signal A written in the buffer memory 4 from the beginning. A compressed moving picture signal B which is read from the buffer memory 4 is processed as mentioned above by the record data for matter 5, supplied to the heads 7 and 8, and recorded on the magnetic tape 9. By doing this, the compressed moving picture signal A starting with the intra-frame is delayed up to the record starting point on the magnetic tape 9 by the buffer memory 4.

As mentioned above, in this embodiment, a new compressed moving picture signal A is always recorded starting with the intra-frame from the record starting point of the magnetic tape 9. Therefore, even if the prediction frame of a recorded compressed moving picture signal is recorded at the end edge of the recording region of the recorded compressed moving picture signal, the new compressed moving picture signal is recorded sequentially starting from the intra-frame thereof from the boundary of assembling of sequences.

The same may be said with overwriting. When the recording start command D is issued from the recording start commander 11, the intra-picture data detector 3 generates the timing signal E at the beginning of the intra-frame of the compressed moving picture signal A and the compressed moving picture signal A is written into the buffer memory 4 starting with the beginning of the intra-frame of the compressed moving picture signal A. The run/revolution servo unit 10 allows the rotary cylinder 6 to rotate and the magnetic tape 9 to run using this timing signal E. When they enter the stable operation state, the run/revolution servo unit 10 outputs a signal, and the record starting point detector 13 detects it, and the read controller 14 operates. Therefore, also in this case, a new compressed moving picture signal is recorded starting with the intra-frame thereof.

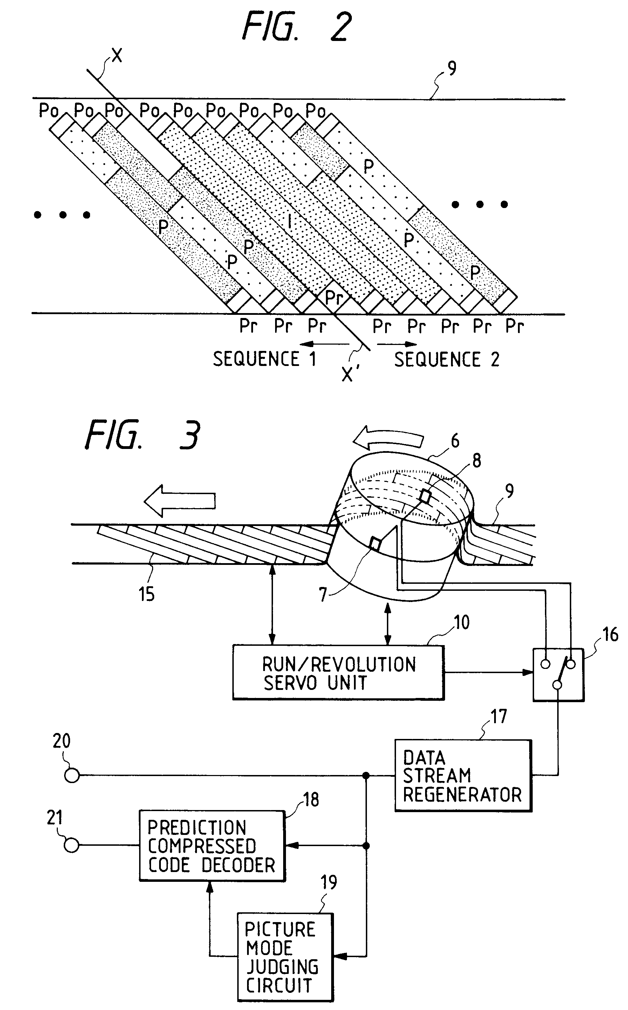

Fig. 2 is a drawing showing an actual example of the record pattern in the neighborhood of the boundary on the magnetic tape 9 on which data is sequence-assembled as mentioned above. A symbol I indicates an intra-frame and P a prediction frame.

In the drawing, a straight line X-X' indicates a boundary of assembling of sequences. The part (Sequence 1) on the left of the boundary on the drawing indicates the recording region of recorded compressed moving picture signals and the part (Sequence 2) on the right indicates the recording region of a new compressed moving picture signal.

In this drawing, the prediction picture P of the recorded compressed moving picture signal is recorded on the last track of Sequence 1 and the new compressed moving picture signal is recorded starting with the intra-frame I thereof from the beginning of Sequence 2.

At both ends of each track, the periods of preamble Pr and postamble Po are provided. On the boundary X-X', the period of preamble Pr is made longer so as to leave an enough space so that the top of the intra-frame I will not be missing.

Fig. 3 is a block diagram showing an actual example of a regenerating apparatus for regenerating the magnetic tape 9 recorded in the embodiment shown in Fig. 1. Numeral 16 indicates a change-over switch, 17 a data stream regenerator, 18 a prediction compressed code decoder, 19 a picture mode judging circuit, and 20 and 21 output terminals. The same numeral is assigned to each of the parts corresponding to Fig. 1 so as to omit duplicate explanation.

This actual example is a companion to the embodiment shown in Fig. 1. Therefore, a part of the constitution shown in Fig. 1 is also used in this example.

When a reconstruction command is issued in Fig. 3, the rotary cylinder 6 rotates and the magnetic tape 9 runs under control of the run/revolution servo unit 10. By doing this, the heads 7 and 8 scan the magnetic tape 9 alternately and the compressed moving picture signals recorded on the magnetic tape 9 are reconstructed.

The run/revolution servo unit 10 controls the change-over switch 16 so that the change-over switch 16 selects the heads 7 and 8 alternately and the compressed moving picture signals reconstructed by the heads 7 and 8 become continuous signals. The continuous reconstructed compressed moving picture signals are supplied to the data stream regenerator 17 so as to perform the error correcting processing and regeneration processing to the original data stream, outputted from the output terminal 20, and supplied to the prediction compressed code decoder 18 and the picture mode judging circuit 19 at the same time.

The picture mode judging circuit 19 judges the picture mode so as to decide whether the frame to which the reconstructed compressed moving picture signals are supplied is an intra-frame or a prediction frame. The prediction compressed code decoder 18 decodes the frame to which the reconstructed compressed moving picture signals are supplied according to the decoding mode (namely, the intra-frame or prediction frame is decoded by the corresponding decoding processing) on the basis of the mode judgment result of the picture mode judging circuit 19 so as to regenerate a frame having the content before coding. By doing this, the original moving picture signals with pictures lengthened are obtained from the prediction compressed code decoder 18 and outputted from the output terminal 21.

Each frame of the reconstructed compressed moving picture signals is decoded like this. Therefore, when a new compressed moving picture signal recorded from the boundary of assembling of sequences on the magnetic tape 9 starts from the intra-frame like the embodiment shown in Fig. 1, reconstructed pictures by the compressed moving picture signals which are reconstructed from this boundary are satisfactory from the beginning. Therefore, reconstructed pictures by the recorded compressed moving picture signals are shifted to reconstructed pictures by new compressed moving picture signals on the boundary continuously and satisfactorily without being disordered.

The same may be said with the magnetic tape 9 which is overwritten as mentioned above.

The actual example shown in Fig. 3 is a companion to the embodiment shown in Fig. 1. However, a dedicated regenerating apparatus which is different from the above may be used.

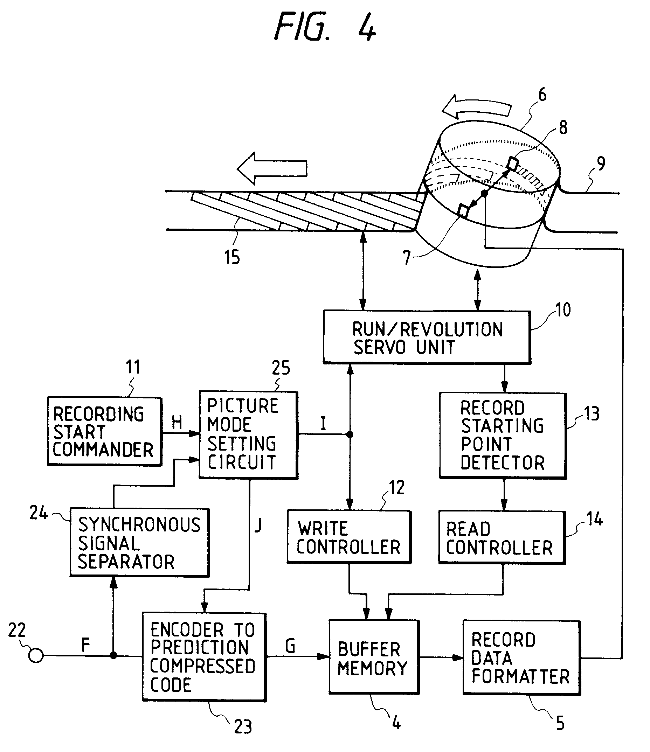

Fig. 4 is a block diagram showing another embodiment of the compressed moving picture recording method and apparatus therefor of the present invention. Numeral 22 indicates an input terminal, 23 an encoder to prediction compressed code, 24 a synchronous signal separator, and 25 a picture mode setting circuit. The same numeral is assigned to each of the parts corresponding to Fig. 1 so as to omit duplicate explanation.

This embodiment is analogized or digitized. However, by inter-frame-coding with prediction a moving picture signal which is not inter-frame-coded with prediction, the signal is recorded as a compressed moving picture signal in the same way as with the embodiment shown in Fig. 1.

The aforementioned moving picture signal F which is inputted from the input terminal 22 is supplied to the encoder to prediction compressed code 23 and the synchronous signal separator 24 and the synchronous signal of the moving picture signal F is separated by the synchronous signal separator 24. This synchronous signal is supplied to the picture mode setting circuit 25.

When a recording start command H is outputted from the recording start commander 11, the picture mode setting circuit 25 operates and outputs a start timing signal I and a mode setting signal J in synchronization with the first frame pulse supplied from the synchronous signal separator 24. When the mode setting signal J is outputted, the encoder to prediction compressed code 23 intra-frame-codes with prediction the moving picture signal F so as to inter-frame-code the frame of the moving picture signal F which is supplied first and generates a compressed moving picture signal G which is similar to the compressed moving picture signal A shown in Fig. 1. When the moving picture signal F to be inputted is an analog signal in this case, needless to say, it is converted to a digital signal before it is inter-frame-coded with prediction.

On the other hand, the start timing signal I outputted from the picture mode setting circuit 25 is supplied to the run/revolution servo unit 10 and the write controller 12. The subsequent operation is the same as that of the embodiment shown in Fig. 1.

As mentioned above, also in this embodiment, a new compressed moving picture signal outputted from the buffer memory 4 is recorded starting with the intra-frame regardless of assembling of sequences and overwriting. The magnetic tape 9 which is recorded in this embodiment also can be regenerated by the regenerating apparatus shown in Fig. 3. Therefore, this embodiment also can produce the same effect as that of the embodiment shown in Fig. 1.

As explained above, according to the present invention, a compressed moving picture signal is recorded always starting with the intra-frame thereof, so that even if data is sequence-assembled or overwritten, the beginning of the new compressed moving picture signal recorded subsequently to the recorded compressed moving picture signal is always an intra-frame. Therefore, even if compressed moving picture signals are reconstructed sequentially from a recording medium on which data is sequence-assembled or overwritten, reconstructed pictures will not be disordered and missing on the record boundary and satisfactory reconstructed pictures can be obtained continuously.

## Claims

1. A compressed moving picture recording method for recording moving picture signals which are data-compressed by inter-frame-coding with prediction on a recording medium comprising:
step of recording the sequence recording start frame of each moving picture signal as a frame which is intra-frame-coded.

2. A compressed moving picture recording method for recording moving picture signals which are data-compressed by inter-frame-coding with prediction on a recording medium comprising:
intra-picture data detection step of detecting the starting point of a sequence frame of each moving picture signal which is intra-frame-coded;
record starting point detection step of detecting that the recording head reaches the record starting position on said recording medium;
step of delaying said moving picture signal at the time of detection at the intra-picture detection step by the time from said detection timing to the time of detection at said record starting point detection step; and step of storing said moving picture signal which is delayed and outputted on said recording medium.

3. A compressed moving picture recording method for data-compressing moving picture signals by inter-frame-coding with prediction and recording them on a recording medium comprising:
encoding step to prediction compressed code of inter-frame-coding each moving picture signal by intra-frame-coding the sequence recording start frame of said moving picture signal;
record starting point detection step of detecting that the recording head reaches the record starting position on said recording medium;
step of delaying the output moving picture signal at said encoding step to prediction compressed code until the record starting position on said recording medium is detected at said record starting point detection step; and step of storing said moving picture signal which is delayed and outputted on said recording medium.

4. A compressed moving picture recording apparatus for recording moving picture signals which are data-compressed by inter-frame-coding with prediction on a recording medium comprising:
means of recording the sequence recording start frame of each moving picture signal as a frame which is intra-frame-coded.

5. A compressed moving picture recording apparatus for recording moving picture signals which are data-compressed by inter-frame-coding with prediction on a recording medium comprising:
intra-picture data detection means of detecting the starting point of a sequence frame of each moving picture signal which is intra-frame-coded;
record starting point detection means of detecting that the recording head reaches the record starting position on said recording medium;
buffer means of delaying said moving picture signal at the time of detection by the intra-picture detection means by the time from said detection timing to the time of detection by said record starting point detection means; and means of storing said moving picture signal outputted from the buffer means on said recording medium.

6. A compressed moving picture recording apparatus for data-compressing moving picture signals by inter-frame-coding with prediction and recording them on a recording medium comprising:
encoding means to prediction compressed code of inter-frame-coding each moving picture signal by intra-frame-coding the sequence recording start frame of said moving picture signal;
record starting point detection means of detecting that the recording head reaches the record starting position on said recording medium;
buffer means of delaying the output moving picture signal by said encoding means to prediction compressed code until the record starting position on said recording medium is detected by said record starting point detection means; and means of storing said moving picture signal outputted from the buffer means on said recording medium.
